(19) **Europäisches Patentamt / European Patent Office / Office européen des brevets**

(11) **EP 2 204 784 B1**

(12) **EUROPEAN PATENT SPECIFICATION**

(45) Date of publication and mention
of the grant of the patent:
**14.09.2011 Bulletin 2011/37**

(51) Int Cl.:
***G08B 21/06*** *(2006.01)*

(21) Application number: **08425825.0**

(22) Date of filing: **31.12.2008**

(54) **A system and method for monitoring the state of vigilance of the driver of a vehicle**

System und Verfahren zur Überwachung des Wachsamkeitszustands des Fahrers eines Fahrzeugs

Système et procédé de surveillance de l'état de vigilance du conducteur d'un véhicule

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**07.07.2010 Bulletin 2010/27**

(73) Proprietor: **Magneti Marelli S.p.A.**
**20011 Corbetta (MI) (IT)**

(72) Inventors:
 • **Ghisio, Guido**
  **10078 Venaria (Torino) (IT)**

 • **Marenco, Daniele**
  **10078 Venaria (Torino) (IT)**

(74) Representative: **Deambrogi, Edgardo et al**
 **Jacobacci & Partners S.p.A.**
 **Corso Emilia 8**
 **10152 Torino (IT)**

(56) References cited:
 **WO-A-2005/052878    DE-A1-102006 060 849**
 **JP-A- 2008 146 515    US-A- 6 061 610**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to driving assistance systems, in particular systems for active safety, and more specifically the techniques of monitoring the state of vigilance of the driver of a vehicle.

The change in the psycho-physical state of the driver, with the consequent decline in vigilance until potentially falling asleep, is one of the main causes of road accidents. Accidents due to falling asleep are generally associated with long hours of driving in monotonous conditions, besides circumstances in which the activity of driving the vehicle interferes with the regular hours of rest/sleep. To these factors is added the effect of the initial conditions in which the driver finds himself at the moment of starting to drive: former fatigue, for example owing to work activity previously performed and only just finished, ingestion of alcohol, medicines or narcotic substances.

In such situations there are negative consequences on driving conditions, including an increase in the reaction times of the driver, deterioration in short term memory, a reduction in vigilance, a lack of reaction to alarm signals and the carrying out of imprecise manoeuvres, until a transitory reduction in the level of vigilance is reached (brief moments of sleep, known as microsleeps) and actual falling asleep. In other words, fatigue and falling asleep are the main conditions which involve a deterioration in the state of vigilance of the driver during driving (visual and auditory perception), with an increase in the probability of errors.

Human fatigue is at least theoretically, detectable by means of various parameters and, on the basis of this presupposition, in recent years numerous researches have been developed, aimed at producing systems for monitoring the physical and psycho-physical condition of the driver.

These systems may be divided into three categories:

- systems for direct monitoring of the driver: they provide for direct monitoring of the driver via the analysis of physiological parameters (such as brain waves, heartbeat, body temperature, breathing, sweating of the hands) or the analysis of physical parameters (such as the posture on the seat, the position and movements of the head, the pressure on the steering wheel, monitoring of the eyes and of the gaze in general);

- systems for interpreting the state of the driver via the direct monitoring of entities related to the vehicle system: they are based on the analysis of the driving operations (such as the position of the accelerator pedal or brake pedal) or of (variations of) the entities related to the dynamics of the vehicle (such as its speed or the lateral position on the carriageway);
- systems for monitoring the response of the driver to external stimuli.

The systems which are based on the direct monitoring of the driver are regarded as intrusive passive systems, since they require measuring instruments placed in the passenger compartment, very close to or in contact with the person, and therefore devices visible to the driver or which may alter the driving ambience and which, finally, may form a disturbance for the driver. These systems have the advantage of being able to carry out direct measurements on the person and consequently are more reliable compared with other types of systems.

The systems which are based on the monitoring of entities related to the vehicle system are on the other hand regarded as non-intrusive passive systems, since they do not require cooperation on the part of the driver and the measurements are taken without any disturbance to him. Unfortunately, they are based on indirect measurements, i.e. they relate to the degree of vigilance of the driver by means of the measurement of parameters external to him, in general vehicle operating parameters. The operations of detecting the parameters in question are normally simple, since they use elementary sensors often already present on the vehicle for other functions. The principal systems which belong to this category are distinguished between systems which are based on the detection of entities characteristic of the dynamics of the vehicle, such as its position (with respect to the carriageway) and direction of travel, the evolution of the longitudinal and lateral speed, the yaw angle and rate, longitudinal acceleration and deceleration, lateral acceleration, and systems which are based on the evaluation of the driving operations carried out by the driver, such as operation of the pedals, the gear-change or the steering wheel.

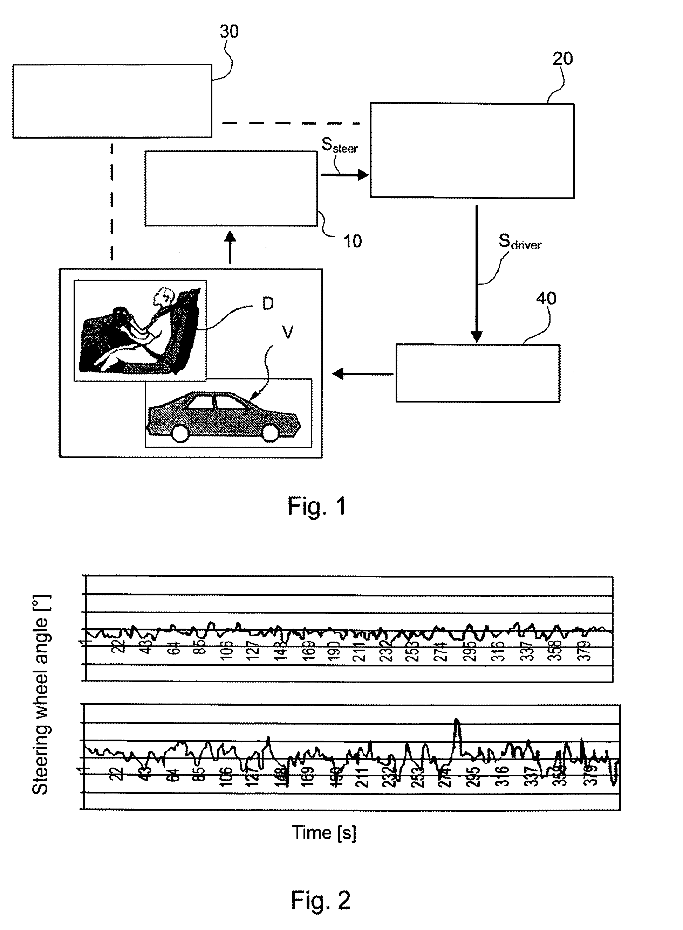

From the logical/functional point of view, independently of the type of signal measured, all the monitoring systems (known by the acronym DDDS, Driver Drowsy Detection Systems) are based on the same structure, shown in Figure 1. By means of one or more sensors (indicated as a whole by the block 10) associated with the vehicle V or with its driver D, one or more parameters are measured. Electrical signals representing the parameters measured are sent to a processing unit 20 arranged for interpreting the data received according to a programmed logic within it, optionally as a result of the identification of the driver which has been carried out by a system 30 according to an auto-learning logic. The processing unit is therefore adapted to supply a signal indicating the estimated psycho-physical conditions of the driver and, if the conditions are not optimal, actuating an alarm or signalling system 40.

With respect to all the methods mentioned, those which directly take into consideration the driving operations are, theoretically, the most competitive and reliable since they are more directly affected by the psycho-physical conditions of the driver and do not require the installation of expensive sensor devices.

The method used in the systems for monitoring entities associated with the dynamics of the vehicle is generally simple: via predetermined sensors (accelerometers, phonic wheels, odometers, gyroscopes) signals indicative of the entities of interest are obtained directly, or they are calculated on the basis of the entities detected by means of analytical operations: the evolution over time of the signal representing the entity being examined is therefore compared with the evolution of reference signals, generally estimated in an auto-learning step in which, starting from the hypothesis that the driver is vigilant when driving commences, the system determines one or more threshold values; finally, the state of vigilance of the driver is determined according to the result of the comparison.

Typically, if a driver is drowsy or in any case his state of vigilance is degraded, the signal indicating the entity measured exhibits wide fluctuations over time.

As a result of in-depth studies in the field, the method which is absolutely most interesting, since it combines simplicity and reliability, is that which takes into consideration the operation of the steering wheel, i.e. the steering manoeuvres.

There are many techniques for evaluating how a driver "controls" the steering wheel. The variables which are most frequently monitored are the angular position of the steering wheel, in particular the amplitude of the corrections made by the driver during driving and the frequency with which such corrections are carried out, the speed of the movements of the steering wheel during the corrections of direction and the torque exerted on the steering wheel by the driver to carry out the manoeuvres.

Among the preceding variables, the one which appears to provide the best results is the steering wheel angle which makes it possible to pick up and analyse the micro-movements which the driver makes in order to correct the direction of travel.

Under normal driving conditions, the driver constantly seeks to hold the vehicle in the centre of the lane with very frequent actions consisting of small, sometimes imperceptible, corrections of the steering wheel angle, which translate into small corrections of direction of the vehicle. Specifically, for the majority of drivers, it has been found that the movements for controlling the steering wheel have a maximum amplitude of around 2° in a range of frequency of between 0.1 and 0.3Hz. It is very important to stress that the width of this field does not vary significantly when considering straight or curved routes.

It has been demonstrated that there is a relationship between the movements imparted to the steering wheel and the degree of vigilance of the driver as disclosed in US 6,061,610 which is considered as the closest prior art. More precisely, when the driver becomes less vigilant, he makes the aforesaid micro-corrections less frequently (i.e. the time interval which occurs between two correction movements tends to increase) and by imparting broader and less precise movements. Inevitably, the entities characteristic of the dynamics of the vehicle also consequently exhibit evolutions different from the rest situation, and also show greater fluctuations.

Figure 2 shows by comparison the signals for correction of the steering wheel angle when the driver is in a rested and a tired state. It is possible to observe visually the difference between the two curves, the upper diagram relating to a driver in good physical condition and the lower diagram relating to the same driver when fatigued.

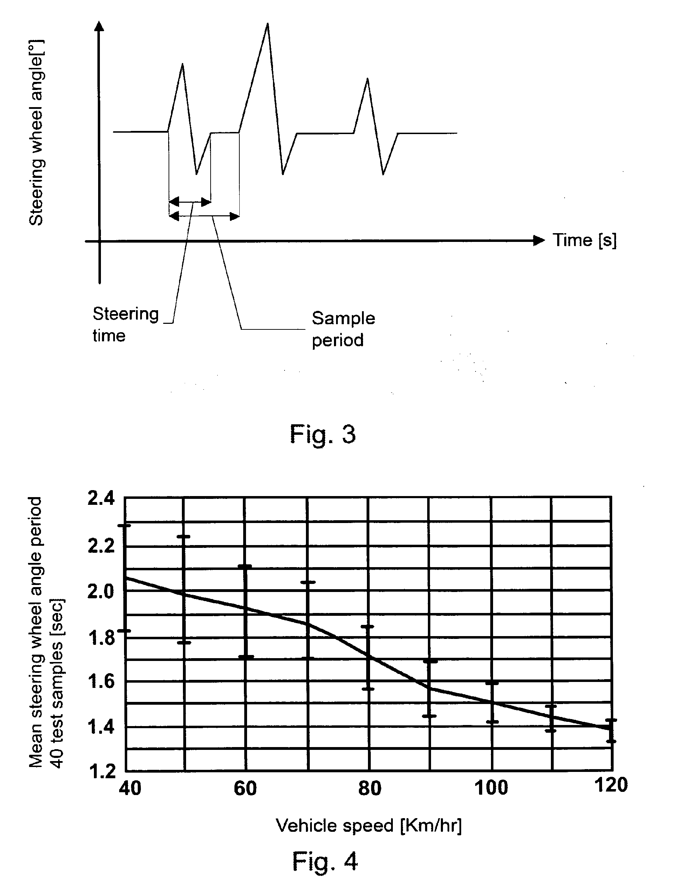

In particular, the entities "steering time" and "sample period", shown more clearly in Figure 3, actually measure the degree of tiredness of the driver: the first signal indicates the time interval calculated from the moment in which a steering action is executed until the normal direction (rectilinear direction) is returned to; the second signal defines the period between two successive steering manoeuvres.

If, at the same speed (also taking into account the angle of yaw and the direction taken by the vehicle) the number of steering manoeuvres decreases over time and the sample period increases, it may be inferred that the level of vigilance of the driver declines in a manner inversely proportional to the steering peaks recorded. It is consequently possible to state that the time interval between one correction and another represents the discriminating factor between a state of vigilance or otherwise: the more driving fatigue increases, the more the time intervals between successive steering actions increase.

However, some problems complicate the management and reliability of an aforesaid monitoring system.

First of all, with the same speed and degree of vigilance, the frequency and amplitude of the corrections varies from driver to driver, so that, in particular, a less sensitive driver always tends to carry out corrections of direction less frequently and with a greater amplitude, even in a vigilant state.

Possible solutions to the problem are those of implementing a system capable of rapidly learning the driving style of the driver, or of recognising it among a series of stored profiles. For this purpose a processing unit based on a neural network may be used.

In addition, with the same degree of vigilance, the period of the corrections on the part of the driver depends on the route followed and the overall travel conditions, including ambient and traffic conditions, and in particular decreases as the speed of travel of the vehicle increases, approximately following the evolution shown in Figure 4.

It is an aim of the present invention to provide an improved system for monitoring the state of vigilance of the driver based on the analysis of the variations over time of the angular position of the steering wheel, and which is adaptable easily and accurately to any type of route followed and travel conditions.

According to the present invention, this aim is achieved by means of a system for monitoring the state of vigilance of the driver of a vehicle having the characteristics claimed in claim 1.

A further subject of the invention is a method for monitoring the state of vigilance of the driver of a vehicle having the characteristics claimed in claim 11.

Particular embodiments form the subject of the dependent claims, the content of which is to be understood as an integral or integrating part of the present description.

To summarise, the present invention is based on the principle of processing the signal representing the evolution of the steering wheel angle through filtering based on information originating from the cartography and/or digital maps of the route which the vehicle is travelling, and also, subordinately, from signals which indicate voluntary deviations from a direction estimated on the basis of the cartographic data, for example for the execution of overtaking or turning manoeuvres, indicated by the actuation of the direction indicators.

Further characteristics and advantages of the invention will be disclosed in more detail in the following detailed description of an embodiment thereof, provided by way of non-limiting example with reference to the appended drawings, in which:

Figure 1 shows an exemplary diagram of a generic system for monitoring the state of vigilance of a driver;

Figure 2 shows comparison diagrams of the evolution of the steering angle corrections made by a driver, respectively when rested or when tired;

Figure 3 shows the general evolution of a signal representing the continuous variations in the steering angle of a vehicle during travel;

Figure 4 shows a graph of the evolution of the amplitude of the corrections to the steering angle of a vehicle in motion, as the speed of travel varies;

Figure 5 shows an exemplary diagram of a system for monitoring the state of vigilance of a driver according to the invention;

Figures 6-9 are graphs of the power spectral density of auto-correlation of the signal representing the steering angle of the vehicle;

Figure 10 is a time diagram in which the steering angle of a vehicle is illustrated, cleaned of the contribution for following a direction of travel along composite straight and curved routes;

Figure 11 shows the evolution of the steering angle signal and the state of a directional indicator device in the case of an overtaking manoeuvre; and

Figure 12 is a diagram representing the flow of operations performed by a processing unit of the system.

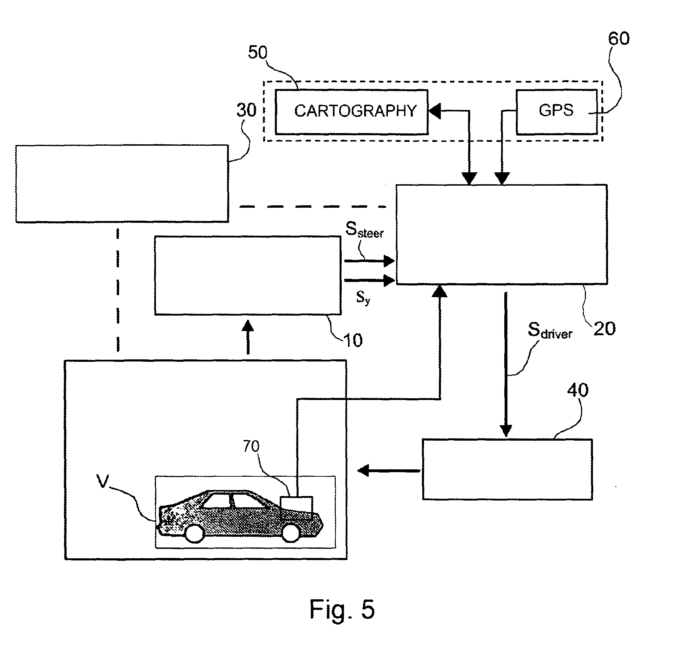

A system for monitoring the state of vigilance of a driver, improved according to the teaching of the invention, is depicted in Figure 5, where elements or components identical or functionally equivalent to those illustrated in Figure 1 have been indicated by the same reference numbers.

As already described previously, a sensor 10 associated with the steering equipment of the vehicle V, for example coupled to the steering column, is arranged for continuously measuring the steering angle in dependence on the time with respect to a reference zero (travel in a straight line) and for emitting a respective measurement signal $S_{steer}$. Further sensors arranged for detecting the yaw rate (for example an onboard gyroscopic sensor), are adapted to provide a signal Sy for estimating the rotation of the vehicle with respect to its centre of gravity, integrating the entity measured in the sampling time. Auxiliary sensors of a different kind, adapted to detect operating states of devices for monitoring the dynamics of the vehicle (ABS, ASR, VDC,...) may also be provided. The processing unit 20 is adapted to supply a signal $S_{driver}$ indicating the estimated psycho-physical condition of the driver, as will be described in more detail hereinafter. This is also coupled to an alarm or signalling system 40, that can be actuated on the basis of the value assumed by the signal $S_{driver}$.

It is assumed that the signal $S_{steer}$ is the combination of at least two contributions, respectively a first contribution due to the manoeuvres of following a general direction of travel, established by following a specific route which may have straight and curved sections or deviations, or by the existing traffic conditions (hence the need for overtaking or changes of lane), and a second contribution due to the steering correction manoeuvres with respect to the general direction of travel followed.

The structure of the conventional system shown in Figure 1 is enhanced with a cartographic module 50, arranged for storing digital maps of a geographic region, to which the processing unit 20 is connected for reading. The processing unit 20 is further coupled to a geographic positioning module 60, for example a module for satellite positioning of the vehicle according to the GPS system, incorporated into the onboard instrumentation or in any case available via a communications connection, for example a portable navigation apparatus connectable to the infotel network of the vehicle by means of a cable or wireless communications protocol, such as Bluetooth or the like.

As an alternative, the processing unit of the monitoring system could benefit from the positioning data on digital maps originating from an onboard navigation system, incorporating a GPS positioning device.

A digital map has the advantage of comprising much more information than a standard map, including, with great accuracy, data of each road route, whether straight or curved, of road junctions, of radii of curvature or local inclination of the roads, besides road sign data. The unit 20 is further connected via a CAN network or dedicated lines to onboard devices or instruments 70 including, for example, the direction indicator devices, adapted to signal intentions of voluntary manoeuvring by the driver, the screen cleaning devices, adapted to signal the presence of adverse atmospheric conditions, sensors for the temperature outside the vehicle, of the type arranged for detecting the presence of ice on the road surface, an odometer, adapted to measure the speed of the vehicle.

The processing unit operates as described below.

First of all, the steering angle signal, measured in dependence on the time with respect to a reference zero, is acquired. The variation and the oscillation of the angle is the result of the sum of various contributions, among which will be included the reaction force of the roadbed, the disturbances originating from the ambience, the curvature of the lane of travel with respect to the horizontal plane, and finally the action exerted on the steering wheel by the driver. It is necessary to isolate only the last contribution listed, by eliminating the low frequency angular noise (6-16dB), introduced by the inherent vibration of the wheel/ground system, which could be superimposed on the steering micro-corrections. For this reason a high-pass filter may be used, according to techniques known to an expert in the field and which will not be discussed here in detail.

It should further be remembered that the values of the steering angle, determined by the sensor mounted on the steering wheel, are in general dependent on the time resolution of the sensor, which is not sufficient to obtain a "continuous" evolution of the variations in the steering angle over time, so that interpolation becomes necessary.

One of the problems to be solved, previously mentioned, lies in the fact that the corrections applied by the driver via the steering wheel also vary according to the speed of the vehicle, as shown in Figure 4. This evolution is found for any kind of vehicle and driver, whether when travelling on urban roads or out of town: the tendency is to reduce the amplitude of the corrections as the speed increases. It is also important to note that at low speeds the dispersion of data becomes greater, or rather, while at high speeds the correction by the drivers is typically reduced to a few tenths of degrees of the steering angle (for example, around $\pm$ 0.05 degrees), at low speeds the angular correction interval is appreciably greater (for example, around $\pm$ 0.25 degrees). This fact also means there is a need to acquire the data differently according to the speed: the frequency of acquisition should increase with the speed of the vehicle, because in these hypotheses the fluctuations of the steering wheel would become narrower and more difficult to calculate.

The steering signal is processed by means of the use of the PSD (Power Spectral Density) function of auto-correlation of the signal at the time t with that of the signal at the time t+τ.

In detail, the PSD is defined as:

$$S_x(\omega) = \sum r_x(\tau) * e^{-j\omega t} = \left| \mathrm{E}\left[ X\left( e^{-j\omega t} \right) \right] \right|^2$$

wherein

$$r_x(\tau) = \mathrm{E}\left[ X_t * X_{t+\tau} \right]$$

is the auto-correlation function of $X_t$, and $X(e^{-jw\tau})$ is the Fourier transform of the function $X_t$ which is independent of the time, but depends solely on the time interval $t_{t+\tau} - t_t$.

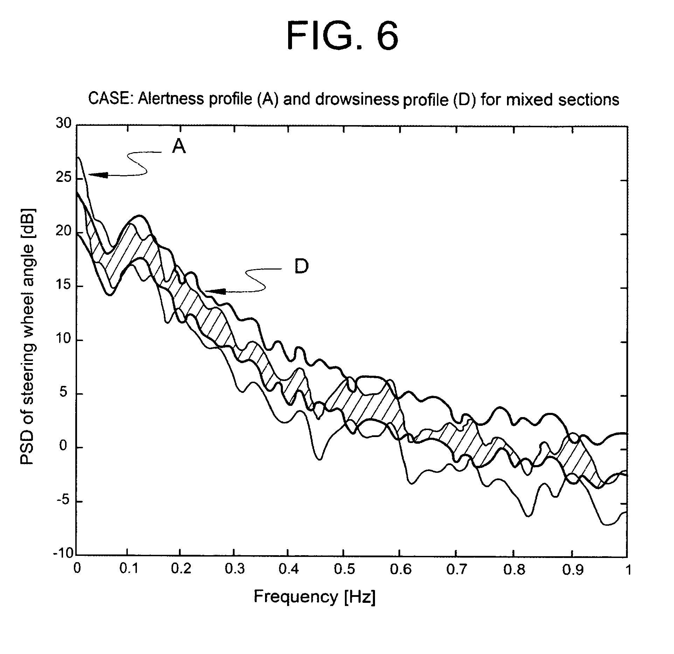

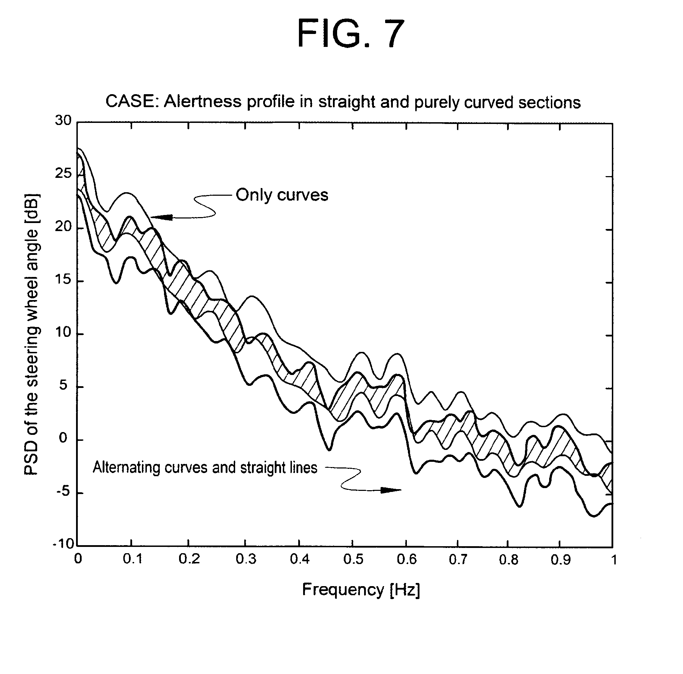

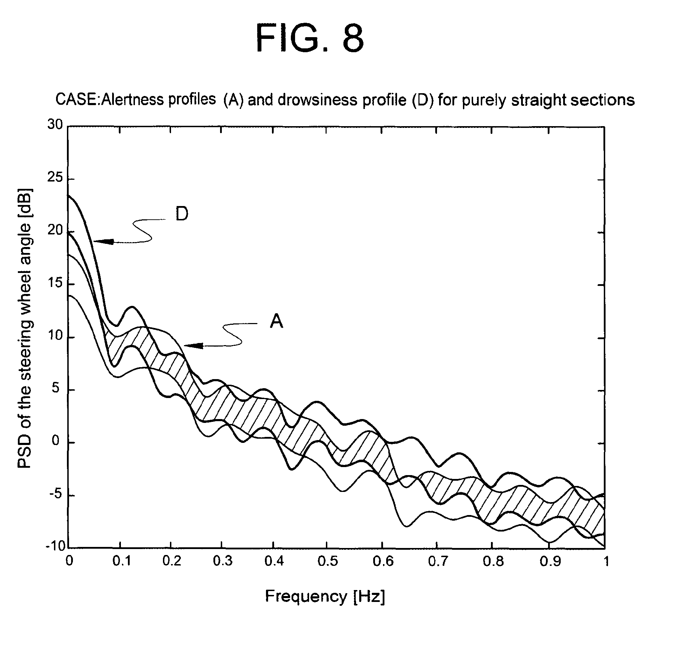

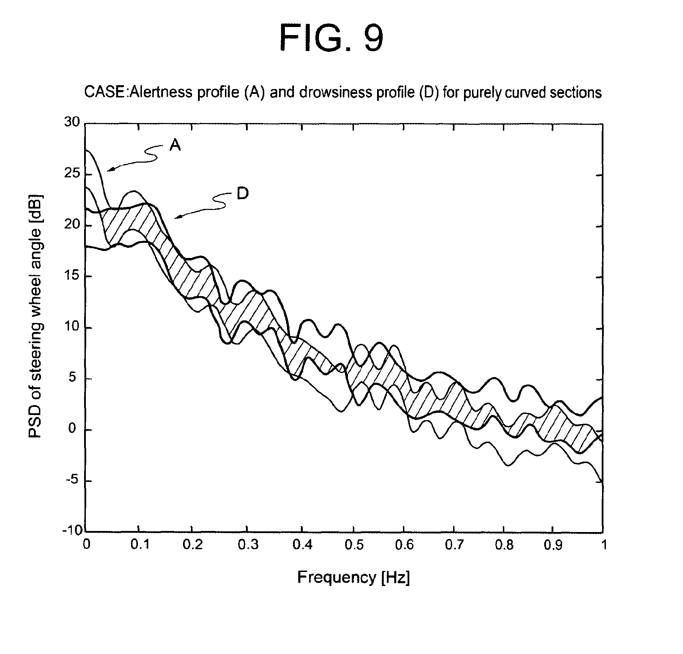

Figures 6-9 show graphs of the evolution of the PSD curve with intervals of confidence at 95% in the case of alert state and drowsy state of the driver, respectively in route conditions with combined curved and straight sections (Figure 6), with curved sections and with combined curved and straight sections in which the driver is vigilant (Figure 7), with only straight sections (Figure 8) and with only curved sections in the case of a vigilant state and a drowsy state (Figure 9).

The graph in Figure 6 clearly shows that there is no superposition between the intervals of confidence in a drowsy state (D) and an alert state (A) for the frequencies around 0.45Hz, 0.60Hz and 0.80Hz. At these frequencies a significant difference is therefore established between the PSD curve of the alert state (A) and the PSD curve of the drowsy state (D), which is useful for classification of the state of vigilance of the driver.

By analysing the superposition of the PSDs for drivers in an alert state when proceeding on purely curved travel sections and on mixed curved and straight sections (Figure 7) a similarity is noted in the two curves for spectral density, except for the frequencies of 0.05 Hz, 0.3 Hz, 0.45 Hz, 0.6 Hz, 0.82 Hz and 0.95 Hz.

Examining the PSD curve only for straight travel sections (Figure 8), it can be seen that the curves which represent the alert state and the drowsy state do not show superposition for frequencies between 0 and 0.06 Hz and 0.65 Hz. On the other hand, examining the PSD curves for curved travel sections (Figure 9), it can be seen that the curves which represent the vigilant state and the drowsy state are not superposed for frequencies of between 0 and 0.03 Hz, and equal to 0.45 Hz, 0.8 Hz, 0.95 Hz.

From the comparison of the frequencies of non-superposition of Figures 8 and 9 with those of Figure 7, it may be understood that the examination of the pure data, without a preliminary distinction of the morphological characteristics of the route travelled, may lead to wrong conclusions, since the steering data exhibit different characteristics according to the type of route followed by the vehicle. Indeed, when the vehicle approaches a bend, the value of the steering angle measured takes account not only of the micro-corrections, the real subject of the analysis of interest for the estimation of the degree of vigilance of the driver, but also of the value of the steering angle imposed in order to take the bend itself, a value is therefore "added" (constant if the radius of the bend is constant) which must be eliminated before analysing the useful signal, bringing the analysis scenario, virtually, to a state of travel in a straight line.

According to the prior art, the steering angle corresponding to the radius of curvature is determined by the relationship between parameters relating to the dynamics of the vehicle. Such a system proves to be insufficiently reliable and accurate, since the determination of the steering angle is in this way independent of the traffic conditions and the morphology of the route travelled.

The solution to the problem is the use of the data from the cartography, coupled to a GPS sensor; the co-ordinates of the vehicle being known, the road state in which the latter is to be found is established, i.e. whether the vehicle is in a straight travel section or on a bend. From the geometric parameters of the road, including the radius of curvature, and which are objective since they come from cartographic data and are not estimated by onboard sensors, it is possible to "clean up" the steering angle signal in order to render it representative of only the micro-corrections applied by the driver.

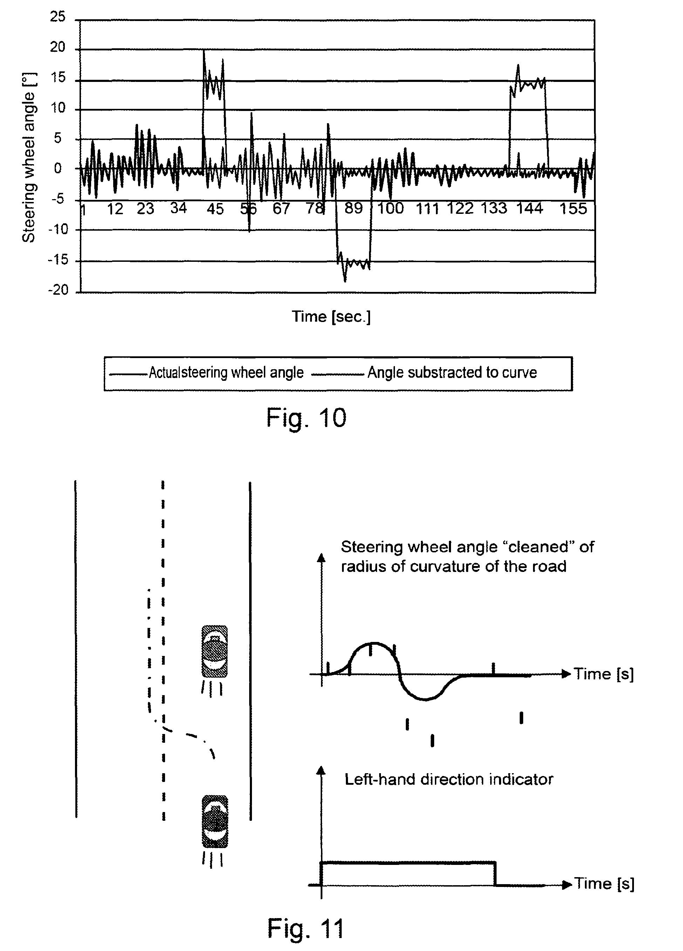

Figure 10 shows the technique for determining the contributions for correction of the steering angle, "cleaned" of the voluntary steering contributions for following curved travel sections. Knowing each time the radius of curvature of the route from the cartographic data, the steering angle corresponding to the radius of curvature is subtracted from the effective steering angle measured.

A further refinement may be obtained by knowing the state of the direction indicators.

Successive overtaking movements cause wider (and less frequent) variations in direction than the micro-corrections typically imparted to maintain the direction of travel, but they should not for this reason be interpreted as a deterioration in the state of vigilance of the driver. In these circumstances, the non-conformity of the data of the radius of curvature of the road (provided by the cartography) in the position in which the vehicle is detected with the sudden variation of the steering angle, and also the actuation of a direction indicator device, are discriminating elements of the intention of the driver to carry out an overtaking manoeuvre (Figure 11).

From the recognition of such conditions, the processing unit can decide to suspend spectral analysis for a time interval in order to avoid an erroneous interpretation of the state of vigilance of the driver and consequent emission of false alarm signals.

Advantageously, an external temperature sensor, the state of activation of the screen-cleaning devices, the state of actuation of the ABS wheel anti-lock systems, of ASR wheel anti-skid systems, of VDC vehicle stability control systems, may be used for detecting adverse meteorological conditions and the corresponding influence on the dynamics of the vehicle, so that in such conditions the system of the invention is rendered transparent, or de-activated.

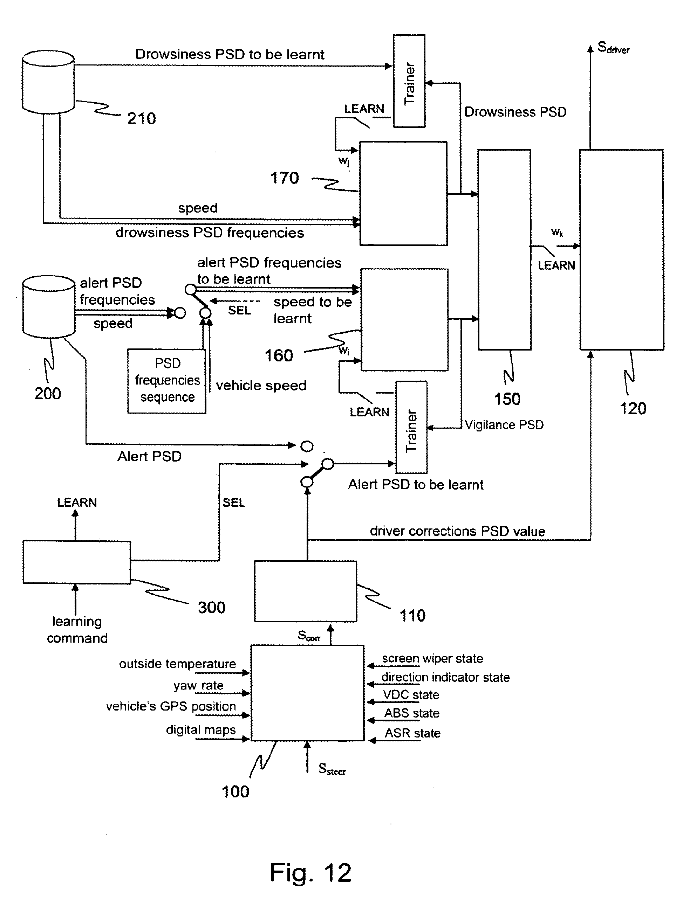

With reference to Figure 12, a detailed description is given of the processing of the signal $S_{steer}$ "cleaned" of the contribution for voluntary steering in dependence on a curvature of the road.

The signal $S_{steer}$ is filtered, "cleaned" of the curvature of the travel direction at the module 100 and confirmed according to the cartographic data (GPS position of the vehicle, digital maps), to the dynamics of the vehicle (yaw rate, state of actuation of the ABS anti-lock wheel systems, of ASR anti-skid wheel systems, VDC vehicle stability control, for example), to the travel conditions (state of direction indicators for signalling intention of possible overtaking manoeuvres) and to the general meteorological driving conditions (external temperature, state of actuation of the screen cleaning devices).

The module 100 is therefore adapted to process and transmit downstream a signal indicating the corrective steering contributions applied by the driver with respect to the general direction of travel followed, indicated in the drawings as $S_{corr}$.

A subsequent module 110 for calculating the PSD function defined above receives at the input the signal $S_{corr}$ and calculates the value of the PSD curve for the corrective steering contributions applied by the driver.

Then, the curve representing the corrective steering angle over time and the data obtained therefrom are compared with reference signals or data, for example via neural networks, in order to estimate the degree of vigilance of the driver, specifically in order to discriminate between a degree of vigilance sufficient for safe driving and an insufficient degree of vigilance, so that there are risks of an accident.

Specifically, the power spectral density PSD calculated is acquired by a neural network 120 classifying the state of the driver, which is adapted to compare the acquired curve with predetermined frequential profiles of alertness and possible drowsiness. The profiles are obtained starting from the standard power spectral density for drowsiness and from that for alertness, in the non-superimposed PSD regions.

In order to confront differing driving styles between drivers, the power spectral density in the vigilant state may derive from training of the neural network 120 dependent on the driving style of the driver on board. He should, therefore, on installation of the aforesaid system, start up a preliminary learning procedure in order to configure the estimation algorithm to his own driving style, for a prefixed learning time in which it is necessary to drive in a fully rested state, without alteration of the actual psycho-physical state (typically related to the ingestion of alcoholic drinks, drugs and medicines), following mixed straight and curved routes, alternating urban and out of town routes, varying the speed so as not to polarise the neural network only for some route conditions.

A module 150 for defining the superimposed and non-superimposed regions of the PSD curves is adapted to train the neural network 120 selectively according to a learning command LEARN given by the driver. At the input it receives the PSD profiles for an alert state and a drowsy state from respective neural networks 160, 170, which are themselves trained by data banks of standard profiles of PSD(f) curves for alertness and drowsiness 200, 210 according to the speed of the vehicle and frequencies of corrections, by means of associated training modules that can be selectively connected by the same LEARN command.

For verified alert states of the driver during the preliminary learning procedure, triggered by a timer 300, the PSD alert curve profile is supplied by the same calculation module 110 to the training module of the neural network 160, via a selection controlled by the SEL signal emitted by the timer. The drawing shows an operating state in which, in the course of a learning period controlled intentionally by the driver, the timer 300 emits a LEARN signal for a learning command, via which the training modules associated with the neural networks 160, 170 are selectively connected to the respective networks in order to supply to them the PSD curve to be learnt, according to the speed of the vehicle and a sequence of correction frequencies.

At the output of the neural network 120 the signal $S_{driver}$ is then supplied, indicating the estimated state of vigilance of the driver.

Finally, as shown in the functional diagram of Figure 5, when the processing unit 20 detects a state of vigilance of the driver below a predetermined alarm threshold, the system intervenes with suitable signalling or alarms to prevent dangerous situations. The signalling or alarm systems, actuated automatically by the system, can supply stimuli to the driver to wake him or recall him to vigilance by signalling to him the non-optimum physical conditions, to warn surrounding vehicles (V2V, vehicle to vehicle) of the danger or to warn the monitoring infrastructures for the road traffic, for example the police forces or a suitable surveillance entity (V2I, vehicle to infrastructure).

In detail, the measures which can be adopted to awaken the vigilance of the driver comprise stimuli of a visual, acoustic, thermal or physical type:

- the visual signals (less intrusive, but also less effective) include the showing on a screen (display located on the dashboard, instrument panel, active windscreen) of icons, pictograms or warning lights;
- the acoustic stimuli include the actuation of a recorded voice, the onboard audio equipment or an acoustic signal within the passenger compartment, or also the actuation of the acoustic warning devices of the vehicle, particularly "intrusive" for the external ambience however;
- the thermal stimuli include the opening of one or more windows, forced ventilation or the actuation of the onboard air-conditioning system;
- the physical stimuli comprise the actuation of vibratory movements of the seat or of the steering wheel.

In order to warn the surrounding vehicles it is on the other hand possible to actuate the acoustic warning devices and/or the emergency lights. The systems for communication with the infrastructure, finally, may be actuated in the event that the driver ignores the preceding alarm signals.

Naturally, the principle of the invention remaining the same, the forms of embodiment and details of construction may be varied widely with respect to those described and illustrated purely by way of non-limiting example, without thereby departing from the scope of the invention defined by the attached claims.

**Claims**

1. A system for monitoring the state of vigilance of the driver (D) of a vehicle (V) which is following a general direction of travel along a route, comprising:

- sensor means (10) adapted to detect the steering angle of the vehicle (V) and emit a steering signal ($S_{steer}$) representing the evolution over time of said angle; and

- electronic processing means (20), adapted to receive the steering signal ($S_{steer}$) from said sensor means (10) and arranged for:

- filtering the steering signal ($S_{steer}$) to eliminate therefrom the steering contributions due to following a general direction of travel;

- carrying out a comparison of the detected characteristics of the corrective manoeuvres with predetermined reference characteristics; and

- evaluating the state of vigilance of the driver (D) according to the result of said comparison,

whereby the processing means (20) are arranged for acquiring cartographic data, calculating the general direction of travel of the vehicle (V) for following the route on the basis of said cartographic data and estimating therefrom the steering contributions due to following said direction,

**characterised in that** the processing means (20) are arranged for acquiring cartographic data indicating the road route travelled by the vehicle (V) and for filtering the steering signal ($S_{steer}$) so as to obtain a filtered signal ($S_{corr}$) indicating the characteristics of amplitude and frequency of the corrective steering manoeuvres with respect to the general direction of travel followed.

2. A system according to claim 1, wherein said predetermined reference characteristics comprise threshold values for amplitude and frequency of the corrective manoeuvres, known according to the speed of travel of the vehicle (V).

3. A system according to claim 1, wherein said predetermined reference characteristics comprise threshold values for amplitude and frequency of the corrective manoeuvres obtained by learning the driving characteristics of the driver (D).

4. A system according to any one of the preceding claims, wherein said processing means (20) are arranged for carrying out a spectral analysis of said corrective manoeuvres by comparison between a PSD power spectral density curve for auto-correlation of the steering signal detected and predetermined PSD power spectral density curves for auto-correlation of the steering signal, respectively associated with states of alertness (A) and drowsiness (D) of the driver, at the known frequencies of non-superposition.

5. A system according to claim 4, wherein said processing means (20) are arranged for acquiring from direction indicating devices data representing the driving intentions, and recognising the characteristics of amplitude and frequency of the steering signal associated with intentional manoeuvres for changing the direction of travel.

6. A system according to claim 5, wherein said processing means (20) are arranged for suspending the spectral analysis for a predetermined time interval in order to avoid an erroneous interpretation of the state of vigilance of the driver (D) on recognising intentional manoeuvres for changing the direction of travel.

7. A system according to claim 4, wherein said processing means (20) are arranged for acquiring data belonging to the group comprising data indicating the external temperature, the state of actuation of the screen cleaning devices, the state of actuation of the ABS anti-lock wheel systems, of ASR anti-skid wheel systems, of VDC vehicle stability control systems, and for recognising adverse meteorological conditions and the corresponding influence on the dynamics of the vehicle (V).

8. A system according to claim 7, wherein said processing means (20) are arranged for suspending the spectral analysis for a predetermined time interval in order to avoid an erroneous interpretation of the state of vigilance of the driver (D) on recognising adverse meteorological conditions.

9. A system according to any one of the preceding claims, wherein the cartographic data comprise digital maps (50) of a geographic region, that can be acquired from devices temporarily associated with the system or permanently belonging thereto, and said processing means (20) are coupled to means (60) for the geographical positioning of the vehicle.

10. A system according to any one of the preceding claims, wherein said processing means (20) are arranged for emitting signalling or alarms adapted to supply stimuli to the driver (D), warning surrounding vehicles, warning the monitoring infrastructures for the road traffic when a state of vigilance of the driver (D) below a predetermined alarm threshold is detected.

**11.** A method for monitoring the state of vigilance of the driver (D) of a vehicle (V) which is following a general direction of travel along a route, comprising:

- detecting the steering angle of the vehicle and emitting a steering signal ($S_{steer}$) representing the evolution over time of said angle;
- acquiring cartographic data and calculating the general direction of travel of the vehicle for following the route on the basis of said cartographic data;
- estimating therefrom the steering contributions due to following said direction;
- filtering the steering signal ($S_{steer}$) to eliminate therefrom the steering contributions due to following a general direction of travel;
- carrying out the comparison of the characteristics of the corrective manoeuvres detected with predetermined reference characteristics; and
- evaluating the state of vigilance of the driver (D) according to the result of said comparison,

the method being **characterized by** acquiring cartographic data indicating the road route travelled by the vehicle (V) and by filtering the steering signal ($S_{steer}$) so as to obtain a filtered signal ($S_{corr}$) indicating the characteristics of amplitude and frequency of the corrective steering manoeuvres with respect to the general direction of travel followed.

**12.** A method according to claim 11, comprising the acquisition of predetermined reference characteristics comprising threshold values for amplitude and frequency of the corrective manoeuvres, known according to the speed of travel of the vehicle (V).

**13.** A method according to claim 11, comprising the acquisition of predetermined reference characteristics comprising threshold values for amplitude and frequency of the corrective manoeuvres obtained by learning the driving characteristics of the driver (D).

**14.** A method according to any one of claims 11 to 13, comprising spectral analysis of said corrective manoeuvres, which includes a comparison between a PSD power spectral density curve for auto-correlation of the steering signal detected and predetermined PSD power spectral density curves for auto-correlation of the steering signal, respectively associated with states of alertness (A) and drowsiness (D) of the driver, at the known frequencies of non-superposition.

**15.** A method according to claim 14, comprising the acquisition from direction indicating devices of data representing the driving intentions, the recognition of characteristics of amplitude and frequency of the steering signal which are associated with intentional manoeuvres for changing the direction of travel, and the suspension of the spectral analysis for a predetermined time interval in order to avoid an erroneous interpretation of the state of vigilance of the driver (D) on recognising intentional manoeuvres for changing the direction of travel.

**Patentansprüche**

**1.** System zur Überwachung des Wachsamkeitszustands des Fahrers (D) eines Fahrzeugs (V), das einer allgemeinen Fahrtrichtung entlang einer Route folgt, das aufweist:

eine Sensoreinrichtung (10), die angepasst ist, den Lenkwinkel des Fahrzeugs (V) zu detektieren und ein Lenksignal ($S_{steer}$), das die Entwicklung des Winkels über die Zeit repräsentiert, auszusenden; und eine elektronische Verarbeitungseinrichtung (20), die angepasst ist, das Lenksignal ($S_{steer}$) von der Sensoreinrichtung (10) zu empfangen, und eingerichtet ist für:

das Filtern des Lenksignals ($S_{steer}$), um daraus die Lenkanteile, die dadurch bedingt sind, dass einer allgemeinen Fahrtrichtung gefolgt wird, zu eliminieren, das Durchführen eines Vergleichs der detektierten Kenngrößen der Korrekturmanöver mit zuvor bestimmten Bezugskenngrößen; und das Bewerten des Wachsamkeitszustands des Fahrers (D) entsprechend dem Ergebnis jenes Vergleichs, wobei die Verarbeitungseinrichtung (20) für das Erfassen kartographischer Daten, das Berechnen der allgemeinen Fahrtrichtung des Fahrzeugs (V) zum Folgen der Route auf der Basis der kartographischen Daten und das Abschätzen, aufgrund dieser Daten, der Lenkanteile, die dadurch bedingt sind, dass jener Richtung gefolgt wird, eingerichtet ist,

**dadurch gekennzeichnet, dass** die Verarbeitungseinrichtung (20) eingerichtet ist für das Erfassen kartographischer Daten, welche die vom Fahrzeug (V) befahrene Straßenroute anzeigen, und für das Filtern des Lenksignals ($S_{steer}$), um ein gefiltertes Signal ($S_{corr}$) zu erhalten, das die Kenngrößen von Amplitude und Frequenz der Lenkkorrekturmanöver in Bezug auf die allgemeine Fahrtrichtung, der gefolgt wird, anzeigt.

2. System gemäß Anspruch 1, bei dem zu den zuvor bestimmten Bezugskenngrößen Schwellenwerte für Amplitude und Frequenz der Korrekturmanöver gehören, die entsprechend der Fahrgeschwindigkeit des Fahrzeugs (V) bekannt sind.

3. System gemäß Anspruch 1, bei dem zu den zuvor bestimmten Bezugskenngrößen Schwellenwerte für Amplitude und Frequenz der Korrekturmanöver gehören, die durch das Erlernen des Fahrverhaltens des Fahrers (D) erhalten werden.

4. System gemäß einem der vorangegangenen Ansprüche, bei dem die Verarbeitungseinrichtung (20) für das Durchführen einer Spektralanalyse der Korrekturmanöver durch Vergleich zwischen einer Kurve der spektralen Leistungsdichte PSD für eine Autokorrelation des detektierten Lenksignals und Kurven der zuvor bestimmten spektralen Leistungsdichte PSD für eine Autokorrelation des Lenksignals, jeweils verbunden mit Zuständen der Wachheit (A) und der Schläfrigkeit (D) des Fahrers, bei den bekannten Frequenzen der Nichtüberlagerung eingerichtet ist.

5. System gemäß Anspruch 4, bei dem die Verarbeitungseinrichtung (20) für das Erfassen von Daten, welche die Fahrabsichten repräsentieren, aus Richtungsanzeigevorrichtungen und das Erkennen der Kenngrößen von Amplitude und Frequenz des Lenksignals in Verbindung mit absichtlichen Manövern zum Ändern der Fahrtrichtung eingerichtet ist.

6. System gemäß Anspruch 5, bei dem die Verarbeitungseinrichtung (20) für das Unterbrechen der Spektralanalyse für eine zuvor bestimmte Zeitdauer eingerichtet ist, um eine Fehlinterpretation des Wachsamkeitszustands des Fahrers (D) beim Erkennen absichtlicher Manöver zum Ändern der Fahrtrichtung zu vermeiden.

7. System gemäß Anspruch 4, bei dem die Verarbeitungseinrichtung (20) für das Erfassen von Daten, die zu der Gruppe von Daten gehören, welche die Außentemperatur, den Betätigungszustand der Reinigungsvorrichtungen der Windschutzscheibe, den Betätigungszustand der Antiblockiersysteme ABS, von Systemen zur Antriebsschlupfregelung ASR, von Systemen zur dynamischen Fahrzeugstabilitätskontrolle VDC anzeigen, und für das Erkennen widriger Wetterbedingungen und des entsprechenden Einflusses auf die Dynamik des Fahrzeugs (V) eingerichtet ist.

8. System gemäß Anspruch 7, bei dem die Verarbeitungseinrichtung (20) für das Unterbrechen der Spektralanalyse für eine zuvor bestimmte Zeitdauer eingerichtet ist, um eine Fehlinterpretation des Wachsamkeitszustands des Fahrers (D) beim Erkennen widriger Wetterbedingungen zu vermeiden.

9. System gemäß einem der vorangegangenen Ansprüche, bei dem zu den kartographischen Daten digitale Landkarten (50) einer geographischen Region gehören, die aus Vorrichtungen erfasst werden können, die vorübergehend mit dem System verbunden sind oder dauerhaft zu ihm gehören, und bei dem die Verarbeitungseinrichtung (20) mit einer Einrichtung (60) zum Bestimmen der geographischen Position des Fahrzeugs gekoppelt ist.

10. System gemäß einem der vorangegangenen Ansprüche, bei dem die Verarbeitungseinrichtung (20) für das Aussenden von Signalen oder Alarmen eingerichtet ist, welche angepasst sind, dem Fahrer (D) Reize zuzuführen, und Fahrzeuge in der Umgebung warnen und die Infrastrukturen zur Überwachung des Straßenverkehrs warnen, wenn ein Wachsamkeitszustand des Fahrers (D) unter einer zuvor bestimmten Alarmschwelle detektiert wird.

11. Verfahren zur Überwachung des Wachsamkeitszustands des Fahrers (D) eines Fahrzeugs (V), das einer allgemeinen Fahrtrichtung entlang einer Route folgt, das aufweist:

   Detektieren des Lenkwinkels des Fahrzeugs und Aussenden eines Lenksignals ($S_{steer}$), das die Entwicklung des Winkels über die Zeit repräsentiert;
   Erfassen kartographischer Daten und Berechnen der allgemeinen Fahrtrichtung des Fahrzeugs zum Folgen der Route auf der Basis der kartographischen Daten;
   Abschätzen, aufgrund dieser Daten, der Lenkanteile, die dadurch bedingt sind, dass jener Richtung gefolgt wird;
   Filtern des Lenksignals ($S_{steer}$), um daraus die Lenkanteile, die dadurch bedingt sind, dass einer allgemeinen Fahrtrichtung gefolgt wird, zu eliminieren;

Durchführen des Vergleichs der Kenngrößen der detektierten Korrekturmanöver mit zuvor bestimmten Bezugsgrößen; und

Bewerten des Wachsamkeitszustands des Fahrers (D) entsprechend dem Ergebnis jenes Vergleichs,

wobei das Verfahren **dadurch gekennzeichnet ist, dass** es kartographische Daten erfasst, welche die vom Fahrzeug (V) befahrene Straßenroute anzeigen, und dass es das Lenksignal ($S_{steer}$) filtert, um ein gefiltertes Signal ($s_{corr}$) zu erhalten, das die Kenngrößen von Amplitude und Frequenz der Lenkkorrekturmanöver in Bezug auf die allgemeine Fahrtrichtung, der gefolgt wird, anzeigt.

12. Verfahren gemäß Anspruch 11, mit der Erfassung zuvor bestimmter Bezugskenngrößen, zu denen Schwellenwerte für Amplitude und Frequenz der Korrekturmanöver gehören, die entsprechend der Fahrgeschwindigkeit des Fahrzeugs (V) bekannt sind.

13. Verfahren gemäß Anspruch 11, mit der Erfassung zuvor bestimmter Bezugskenngrößen, zu denen Schwellenwerte für Amplitude und Frequenz der Korrekturmanöver gehören, die durch das Erlernen des Fahrverhaltens des Fahrers (D) erhalten werden.

14. Verfahren gemäß einem der Ansprüche 11 bis 13, mit einer Spektralanalyse der Korrekturmanöver, zu der ein Vergleich zwischen einer Kurve der spektralen Leistungsdichte PSD für eine Autokorrelation des detektierten Lenksignals und Kurven der zuvor bestimmten spektralen Leistungsdichte PSD für eine Autokorrelation des Lenksignals, jeweils verbunden mit Zuständen der Wachheit (A) und der Schläfrigkeit (D) des Fahrers, bei den bekannten Frequenzen der Nichtüberlagerung gehört.

15. Verfahren gemäß Anspruch 14, mit der Erfassung von Daten, welche die Fahrabsichten repräsentieren, aus Richtungsanzeigevorrichtungen, der Erkennung von Kenngrößen von Amplitude und Frequenz des Lenksignals, die mit absichtlichen Manövern zum Ändern der Fahrtrichtung verbunden sind, und der Unterbrechung der Spektralanalyse für eine zuvor bestimmte Zeitdauer, um eine Fehlinterpretation des Wachsamkeitszustands des Fahrers (D) beim Erkennen absichtlicher Manöver zum Ändern der Fahrtrichtung zu vermeiden.

## Revendications

1. Système pour la surveillance de l'état de vigilance du conducteur (D) d'un véhicule (V) qui suit une direction générale de déplacement le long d'un itinéraire, comprenant:

- des moyens détecteurs (10) adaptés pour détecter l'angle d'orientation du véhicule (V) et émettre un signal d'orientation ($S_{steer}$) représentant l'évolution dans le temps dudit angle; et
- des moyens de traitement électroniques (20), adaptés pour recevoir le signal d'orientation ($S_{steer}$) provenant desdits moyens détecteurs (10) et agencés pour:
- filtrer le signal d'orientation ($S_{steer}$) pour en éliminer les contributions de direction dues au suivi d'une direction générale de déplacement;
- procéder à une comparaison des caractéristiques détectées des manoeuvres correctives avec des caractéristiques de référence prédéterminées; et
- évaluer l'état de vigilance du conducteur (D) conformément au résultat de ladite comparaison,

tandis que les moyens de traitement (20) sont agencés pour acquérir des données cartographiques, calculer la direction générale de déplacement du véhicule (V) pour suivre l'itinéraire sur la base desdites données cartographiques et estimer à partir de là les contributions à l'orientation dues au suivi de ladite direction,

**caractérisé en ce que** les moyens de traitement (20) sont agencés pour acquérir des données cartographiques indiquant l'itinéraire routier suivi par le véhicule (V) et pour filtrer le signal d'orientation ($S_{steer}$), de manière à obtenir un signal filtré ($S_{corr}$) indiquant les caractéristiques d'amplitude et de fréquence des manoeuvres d'orientation correctives par rapport à la direction générale de déplacement suivie.

2. Système selon la revendication 1, dans lequel lesdites caractéristiques de référence prédéterminées comprennent des valeurs de seuil pour l'amplitude et la fréquence des manoeuvres correctives, connues en fonction de la vitesse de déplacement du véhicule (V).

3. Système selon la revendication 1, dans lequel lesdites caractéristiques de référence prédéterminées comprennent des valeurs de seuil pour l'amplitude et la fréquence des manoeuvres correctives obtenues par prise en compte des caractéristiques de conduite du conducteur (D).

4. Système selon l'une quelconque des revendications précédentes, dans lequel lesdits moyens de traitement (20) sont agencés pour effectuer une analyse spectrale desdites manoeuvres correctives par comparaison entre une courbe de densité spectrale de puissance DSP pour l'auto-corrélation du signal d'orientation détecté et des courbes de densité spectrale de puissance DSP prédéterminées pour l'auto-corrélation du signal d'orientation, respectivement associées à des états de vigilance (A) et d'assoupissement (D) du conducteur, aux fréquences connues de non-superposition.

5. Système selon la revendication 4, dans lequel lesdits moyens de traitement (20) sont agencés pour acquérir, à partir de dispositifs indiquant la direction, des données représentant les intentions de conduite, et reconnaissant les caractéristiques d'amplitude et de fréquence du signal d'orientation associé à des manoeuvres intentionnelles pour changer la direction de déplacement.

6. Système selon la revendication 5, dans lequel lesdits moyens de traitement (20) sont agencés pour suspendre l'analyse spectrale pendant un intervalle de temps prédéterminé afin d'éviter une interprétation erronée de l'état de vigilance du conducteur (D) sur la reconnaissance de manoeuvres intentionnelles pour changer la direction de déplacement.

7. Système selon la revendication 4, dans lequel lesdits moyens de traitement (20) sont agencés pour acquérir des données appartenant au groupe comprenant les données indiquant la température extérieure, l'état de mise en action des dispositifs de nettoyage des vitres, l'état de mise en action des systèmes d'anti-verrouillage pour les roues ABS, des systèmes d'anti-patinage pour les roues ASR, des systèmes de surveillance de la stabilité du véhicule VDC, et pour la reconnaissance de conditions météorologiques défavorables et l'influence correspondante sur la dynamique du véhicule (V).

8. Système selon la revendication 7, dans lequel lesdits moyens de traitement (20) sont agencés pour suspendre l'analyse spectrale pendant un intervalle de temps prédéterminé afin d'éviter une interprétation erronée de l'état de vigilance du conducteur (D) sur la reconnaissance de conditions météorologiques défavorables.

9. Système selon l'une quelconque des revendications précédentes, dans lequel les données cartographiques comprennent des cartes numériques (50) d'une région géographique, qui peuvent être acquises à partir de dispositifs temporairement associés au système ou en faisant partie en permanence, et lesdits moyens de traitement (20) sont couplés à des moyens (60) pour le positionnement géographique du véhicule.

10. Système selon l'une quelconque des revendications précédentes, dans lequel lesdits moyens de traitement (20) sont agencés pour émettre un signalement ou des alarmes adaptés pour procurer des stimuli au conducteur (D), avertir les véhicules environnants, avertir les infrastructures de surveillance pour le trafic routier lorsqu'un état de vigilance du conducteur (D) inférieur à un seuil d'alarme prédéterminé est détecté.

11. Procédé pour la surveillance de l'état de vigilance du conducteur (D) d'un véhicule (V) qui suit une direction générale de déplacement le long d'un itinéraire, comprenant:

   - la détection de l'angle d'orientation du véhicule et l'émission d'un signal d'orientation ($S_{steer}$) représentant l'évolution dans le temps dudit angle;
   - l'acquisition de données cartographiques et le calcul de la direction générale de déplacement du véhicule pour suivre l'itinéraire sur la base desdites données cartographiques;
   - l'estimation à partir des contributions d'orientation dues au suivi de ladite direction;
   - le filtrage du signal d'orientation ($S_{steer}$) pour en éliminer les contributions d'orientation dues au suivi d'une direction générale de déplacement;
   - l'accomplissement de la comparaison des caractéristiques des manoeuvres correctives détectées avec des caractéristiques de référence prédéterminées; et
   - l'évaluation de l'état de vigilance du conducteur (D) selon le résultat de ladite comparaison,

le procédé étant **caractérisé par** l'acquisition de données cartographiques indiquant l'itinéraire routier suivi par le véhicule (V) et par le filtrage du signal d'orientation ($S_{steer}$) de manière à obtenir un signal filtré ($S_{corr}$) indiquant les caractéristiques d'amplitude et de fréquence des manoeuvres d'orientation correctives en ce qui concerne la direction générale de déplacement suivie.

**12.** Procédé selon la revendication 11, comprenant l'acquisition de caractéristiques de référence prédéterminées comprenant des valeurs de seuil pour l'amplitude et la fréquence des manoeuvres correctives, connues en fonction de la vitesse de déplacement du véhicule (V).

**13.** Procédé selon la revendication 11, comprenant l'acquisition de caractéristiques de référence prédéterminées comprenant des valeurs de seuil pour l'amplitude et la fréquence des manoeuvres correctives obtenues par acquisition de la connaissance des caractéristiques de conduite du conducteur (D).

**14.** Procédé selon l'une quelconque des revendications 11 à 13, comprenant l'analyse spectrale desdites manoeuvres correctives, qui comprend une comparaison entre une courbe de densité spectrale de puissance DSP pour l'auto-corrélation du signal d'orientation détecté et des courbes de densité spectrale de puissance DSP prédéterminées pour l'auto-corrélation du signal d'orientation, respectivement associées à des états de vigilance (A) et d'assoupissement (D) du conducteur, aux fréquences connues de non-superposition.

**15.** Procédé selon la revendication 14, comprenant l'acquisition, à partir de dispositifs indiquant la direction, de données représentant les intentions du conducteur, la reconnaissance de caractéristiques d'amplitude et de fréquence du signal d'orientation qui sont associées à des manoeuvres intentionnelles pour changer la direction de déplacement, et la suspension de l'analyse spectrale pendant un intervalle de temps prédéterminé afin d'éviter une interprétation erronée de l'état de vigilance du conducteur (D) sur la reconnaissance de manoeuvres intentionnelles pour le changement de la direction de déplacement.

Fig. 1

Time [s]

Fig. 2

Fig. 3

Vehicle speed [Km/hr]

Fig. 4

Fig. 5

# FIG. 6

CASE: Alertness profile (A) and drowsiness profile (D) for mixed sections

# FIG. 7

CASE: Alertness profile in straight and purely curved sections

# FIG. 8

CASE:Alertness profiles (A) and drowsiness profile (D) for purely straight sections

# FIG. 9

CASE:Alertness profile (A) and drowsiness profile (D) for purely curved sections

Fig. 10

Fig. 11

Drowsiness PSD to be learnt

Trainer

$S_{driver}$

LEARN

Drowsiness PSD

210

$w_j$

170

speed

drowsiness PSD frequencies

$w_k$

LEARN

alert PSD frequencies
to be learnt

alert PSD
frequencies

SEL

speed to be
learnt

speed

160

$w_i$

PSD
frequencies
sequence

vehicle speed

200

LEARN

Trainer

150

120

Alert PSD

Vigilance PSD

LEARN

SEL

Alert PSD to be learnt

learning
command

300

driver corrections PSD value

110

$S_{corr}$

outside temperature

screen wiper state

yaw rate

direction indicator state

vehicle's GPS position

VDC state

digital maps

ABS state

ASR state

100

$S_{steer}$

## Fig. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6061610 A